Europäisches Patentamt

European Patent Office

Office européen des brevets

(19)

(11) Veröffentlichungsnummer: **0 054 958**
**A2**

## (12) EUROPÄISCHE PATENTANMELDUNG

(21) Anmeldenummer: **81110672.3**

(22) Anmeldetag: **22.12.81**

(51) Int. Cl.³: **H 02 H 3/33**

(30) Priorität: **23.12.80 DE 3048785**

(43) Veröffentlichungstag der Anmeldung: **30.06.82**
**Patentblatt 82/26**

(84) Benannte Vertragsstaaten: **BE CH FR GB IT LI NL SE**

(71) Anmelder: **BROWN, BOVERI & CIE Aktiengesellschaft,**
**Kallstadter Strasse 1, D-6800 Mannheim 31 (DE)**

(72) Erfinder: **Schaufuss, Erich, Dr. Ing., Am**
**Schelmenbuckel 57, D-6800 Mannheim (DE)**

(74) Vertreter: **Kempe, Wolfgang, Dr. et al, c/o BROWN,**
**BOVERI & CIE AG Kallstadter Strasse 1,**
**D-6800 Mannheim 31 (DE)**

(54) **Schaltungsanordnung zur Erfassung eines Fehlerstromes.**

(57) Es wird eine Fehlerstromerfassungs- und Verarbeitungsanordnung angegeben, bei der ein integrierter Schaltkreis (14) als Einrichtung zur Erfassung und Auswertung eines von der Sekundärwicklung (12) eines Summenstromwandlers (10) abgegebenen Fehlerstromsignals verwendet wird. Die Einrichtung (14) wird mittels zusätzlicher Elemente (15, 90, 44, 63, 64, 82, 84, 90, 94, 96) beschaltet, wodurch ein Ratterschutz für einen durch ein steuerbares Halbleiterventil (54) angesteuerten Auslöser (74) und eine Nulleiter-Überwachung sowohl bei Wechselfehlerströmen als auch bei Gleichfehlerströmen bewirkt wird.

EP 0 054 958 A2

BROWN, BOVERI & CIE AKTIENGESELLSCHAFT

Mannheim                                    14. Dezember 1981

ZPT/P4-Ft/Ht                                Mp.-Nr. 654/80

## Schaltungsanordnung zur Erfassung eines Fehlerstromes

Die Erfindung betrifft eine Schaltungsanordnung gemäß den Oberbegriffen der Ansprüche 1, 3, 4 und 5.

Fehlerstromschutzschalter der eingangs genannten Art werden neuerdings immer mehr mit elektronischen Einrichtungen zum Verstärken und Verarbeiten des von der Sekundärwicklung des Summenstromwandlers erzeugten Fehlerstromsignales eingesetzt. Dabei gibt es eine Reihe von integrierten Schaltkreisen, die insbesondere bei sinusförmigen Fehlerströmen mit geeigneter Zusatzbeschaltung durchaus zu vernünftigen Fehlerstromschutzschaltern führen.

Die bekannten integrierten Schaltkreise besitzen dabei einen Operationsverstärker, auf dessen Eingang die Enden der Sekundärwicklung aufgeschaltet sind, welcher Operationsverstärker ggf. mit weiteren elektronischen Schaltelementen ein Signal erzeugt, das zur Aufladung eines Kondensators verwendet werden kann, der meist außerhalb des Schaltkreises angeordnet ist und der einen im Inneren des Schaltkreises liegenden Speicher, Latch genannt, setzt, so daß dieser das Gate eines Thyristors gegebenenfalls über ein weiteres elektronisches Schaltelement, wie z. B. einen Transistor, zum Durchzünden des Thyristors bzw. allgemein des Halbleiterventiles ansteuert, wodurch ein Auslöser betätigt wird.

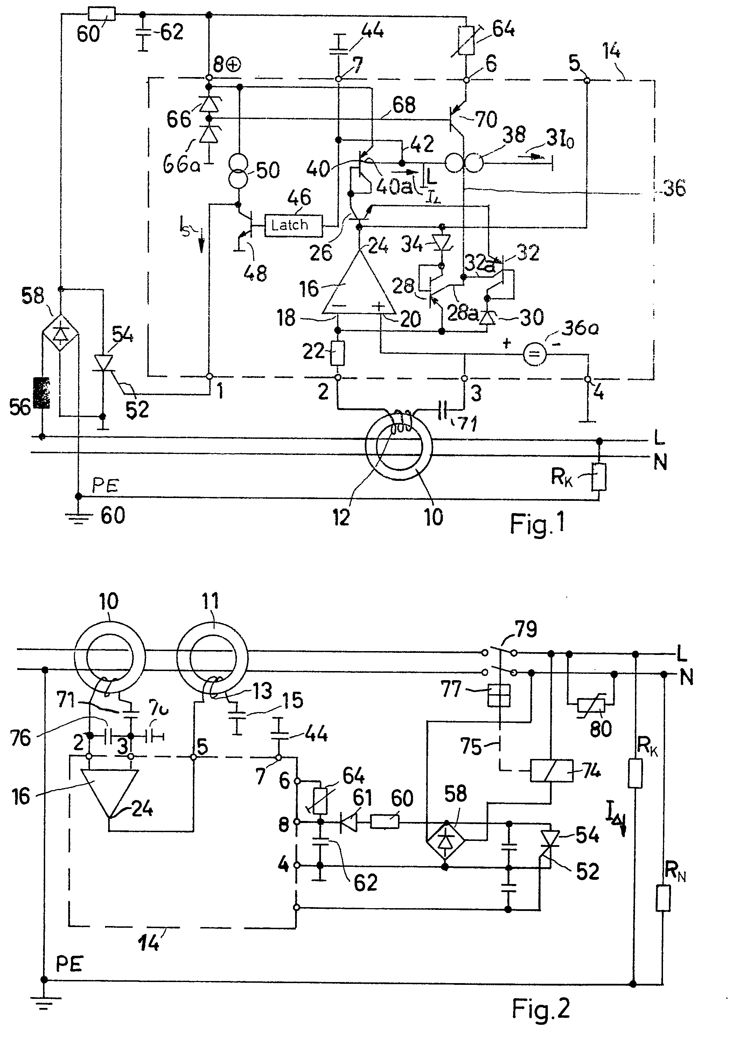

Eine Schaltungsanordnung, die im wesentlichen für sinusförmige Fehlerströme verwendet werden kann, ist beispielsweise durch das Datenblatt der Firma National Semiconductor, Corp., USA, April 1978, Fig. 1 und 2.

Bei dieser bekannten Schaltungsanordnung erfolgt die Versorgung des integrierten Schaltkreises, der die Bezeichnung LM1851 besitzt, mittels einer Gleichrichterbrücke und auch das Halbleiterventil ist zwischen die Gleichstrom- oder Gleichspannungsausgänge der Gleichrichterbrücke geschaltet. Bei Fehlerströmen, die an der Grenze des Ansprechbereiches auftreten, besteht das Problem, daß bei der Ansteuerung bzw. nach der Ansteuerung des Thyristors dieser durchgeschaltet wird, so daß auch der Ausgang der Gleichrichterbrücke kurzgeschlossen wird, was zu einem Abfall der Versorgungsspannung und damit durch das Verschwinden des Ansteuersignals wieder zum Erlöschen des Thyristors führt. Dieser sich schnell und öfter wiederholende Kurzschluß bzw. Verlust der Versorgungsspannung führt zu einem mechanischen Rattern des Auslösers, wodurch dessen Lebensdauer stark verringert wird.

Aufgabe der Erfindung ist es, eine Schaltungsanordnung der eingangs genannten Art zu schaffen, bei der das mechanische Rattern les Auslösers vermieden wird, ohne den Auslöser selbst ändern zu müssen.

Diese Aufgabe wird erfindungsgemäß gelöst durch die kennzeichnenden Merkmale des Anspruches 1; dabei sind weitere vorteilhafte Ausgestaltungen dem Unteranspruch 2 zu entnehmen.

Durch diese erfindungsgemäße Ausgestaltung wird das Zündsignal für den Thyristor gespeichert, so daß der Thyristor bei der nächstfolgenden Halbwelle trotz Abfallens der Versorgungsspannung wieder durchgezündet wird. Dadurch wird das Rattern des Auslösers vermieden und die Lebensdauer des Auslösers erhöht.

Ein weiteres Problem besteht darin, daß bei netzseitig geerdetem Neutralleiter ein Erdschluß des Neutralleiters auf der Lastseite ebenso wie ein Fehlerstrom des Phasenleiters gegen Erde eine Auslösung des Schutzschalters bewirken muß, bei dem die erfindungsgemäße Schaltungsanordnung verwendet werden soll. Eine bekannte Neutralleiter-Überwachung ist in der Figur 2 dargestellt. Sie besitzt einen zusätzlichen Summenstromtransformator mit einer zusätzlichen Sekundärwicklung, die mit ihrem einen Anschluß über einen Kondensator an Null Volt liegt und mit ihrem zweiten Anschluß an den Ausgang eines in einer als integrierter Schaltkreis ausgebildeten Einrichtung zur Erfassung und Verstärkung von Fehlerstrom-Signalen enthaltenen Operationsverstärkers angeschlossen ist. Eine weitere Aufgabe der Erfindung ist es daher, eine Schaltungsanordnung der eingang genannten Art noch weiter zu verbessern. Diese Aufgabe wird erfindungsgemäß durch die kennzeichnenden Merkmale des Anspruches 3 gelöst.

Wenn also auf der Lastseite beispielsweise ein Erdschluß des Neutralleiters auftritt, wird insgesamt eine Kurzschlußwindung oder Kurzschlußring gebildet, der eine Rückkopplung bewirkt, wodurch die beiden Summenstromtransformatoren oder Summenstromwandler mit ihren Wicklungen miteinander gekoppelt werden. Durch diese Rückkopplung wird über den Operationsverstärker eine mittelfrequente Schwingung angefacht. Die Wirkungsweise der Rückkopplung und die Verstärkung sind tragende Elemente der Anordnung. Die erfindungsgemäße Ausgestaltung bildet dabei den Schwingkreis zur Erzeugung der Mittelfrequenz, wobei dieser durch den rückgekoppelten Operationsverstärker angefacht wird. Ohne die erfindungsgemäß eingesetzte Diode würde im Prinzip zwar auch eine Auslösung stattfinden und zwar wie folgt:

- 4 -

0054958

Durch die Rückkopplung wird eine Schwingung in jenem Schwingkreis angefacht, der aus der Sekundärwicklung des zweiten Summenstromwandlers und der Primärwicklung gebildet ist. Dadurch wird in der Primärwicklung, also in den Leitern, ein Strom erzeugt, der in dem ersten Summenstromwandler als Fehlerstrom gemessen wird, wodurch eine Abschaltung erfolgt. Der Kondensator und die mit ihm den Schwingkreis bildende Sekundärwicklung des weiteren Summenstromwandlers legen in der Hauptsache die Frequenz fest. Wenn nun im Falle eines Erdschlußstromes die Schwellenspannung der Diode überschritten ist, findet eine plötzliche Aufladung des zeitbestimmenden Kondensators statt, wodurch eine Auslösung erfolgt. Der Vorzug dieser Einrichtung ist ein Ansprechen bei geringeren Erdschlußströmen als beim Betrieb ohne Diode. Durch die Schwellenspannung der Diode wird ein Ansprechen auf Störsignale vermieden.

Ein weiteres Problem besteht darin, daß bei netzseitig geerdetem
Ein weiteres Problem bei der Erfindung liegt darin, daß insbesondere der integrierte Schaltkreis, der das von der ersten Sekundärwicklung erzeugte Signal verarbeitet und verstärkt, lediglich für sinusförmigen Wechselstrom konzipiert ist. Wenn pulsierende Gleichfehlerströme auftreten, können die von den VDE-Vorschriften vorgegebenen Grenzen nicht eingehalten werden, z. B. dann, wenn die pulsierenden Gleichfehlerströme durch eine Phasenanschnittssteuerung erzeugt werden.

Dieses Problem wird erfindungsgemäß durch die kennzeichnenden Merkmale des Anspruches 4 gelöst.

Während bei sinusförmigen Fehlerströmen die Einstellung unterschiedlicher Nennfehlerströme unproblematisch durch Verstellen eines veränderbaren Widerstandes 64 (siehe Figur 2) erfolgen kann, werden bei zusätzlich geforderter Erfassung bei pulsierenden Gleichfehlerströmen zusätzliche Maßnahmen erforderlich. Bei höheren Nennströmen ist die Windungszahl der Sekundärwicklung des Fehlerstromtransformators oder Summenstromwand-

- 5 -

0054958

lers proportional zu vergrößern. Dies erfordert einen höheren Herstellungsaufwand. Eine weitere Aufgabe der Erfindung besteht daher darin, eine Ersatzlösung anzugeben, bei der die Erhöhung der Windungszahl vermieden wird.

Diese Aufgabe wird erfindungsgemäß durch die kennzeichnenden Merkmale des Anspruches 6 gelöst. Es werden also vor dem invertierenden Eingang des Operationsverstärkers erfindungsgemäß Vorschaltglieder angeordnet, die aus einem oder drei Widerständen und einem Kondensator bestehen, wobei der Kondensator zum ungehinderten Durchlaß der bei einem Neutralleiterfehler entstehenden mittelfrequenten Schwingungen dient. Damit kann der oben erwähnte integrierte Schaltkreis LM 1851 auch dann verwendet werden, wenn zusätzlich die Erfassung von pulsierenden Gleichfehlerströmen mit größerem als dem vom Hersteller vorgesehenen Nennstrom gefordert ist.

Die einzelnen Merkmale der Ansprüche 1 und 2, 3, 4 und 5 bis 7 können unabhängig voneinander und auch gemeinsam miteinander eingesetzt werden. Die Merkmale der Ansprüche 1 bis 3 können auch unabhängig von dem zu verwenden integrierten Schaltkreis benutzt werden.

Anhand der Zeichnung, in der Ausführungsbeispiele der Erfindung dargestellt sind, sollen die Erfindung sowie weitere vorteilhafte Ausgestaltungen und Verbesserungen sowie weitere Vorteile näher erläutert und beschrieben werden.

- 6 -

. Es zeigt:

Figur 1    ein Blockschaltbild einer bekannten Fehlerstromschutzschalteranordnung mit einem integrierten Schaltkreis,
der in bevorzugter Weise für die erfindungsgemäße
Schaltungsanordnung Verwendung findet,

Figur 2    eine weitere Ausgestaltung einer bekannten Schaltungsanordnung,

Figur 3    eine Schaltungsanordnung zur Verhinderung eines Ratterns,

Figur 4    eine Schaltungsanordnung zur Verbesserung der
Überwachung des Nulleiters auf Erdschluß,

Figur 5    eine Schaltungsanordnung zur Verbesserung des
Anprechens auf pulsierende Gleichfehlerströme, die
durch Phasenanschnittssteuerungen erzeugt werden,

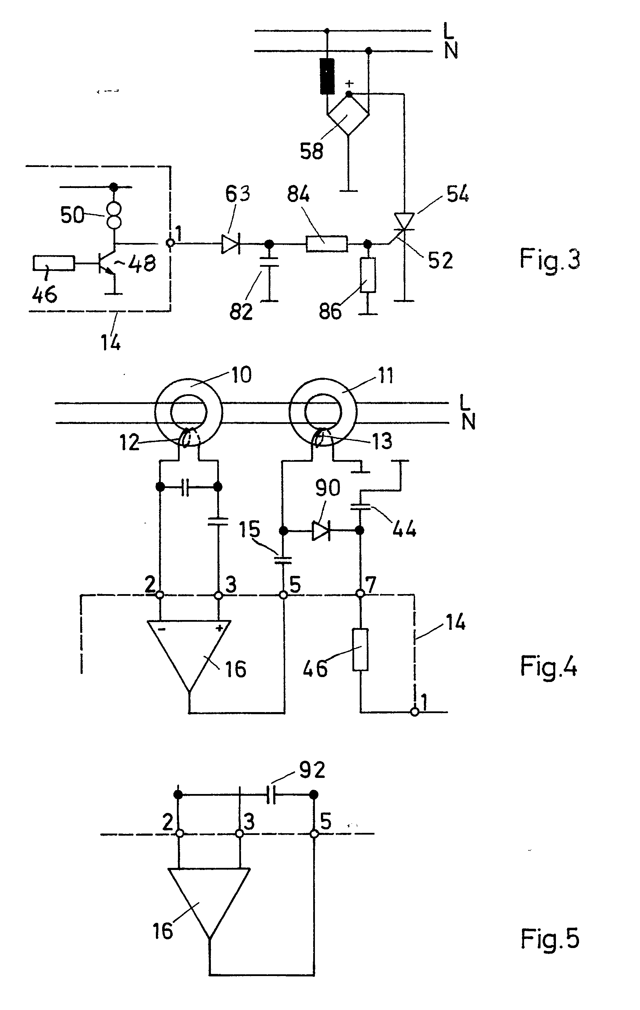

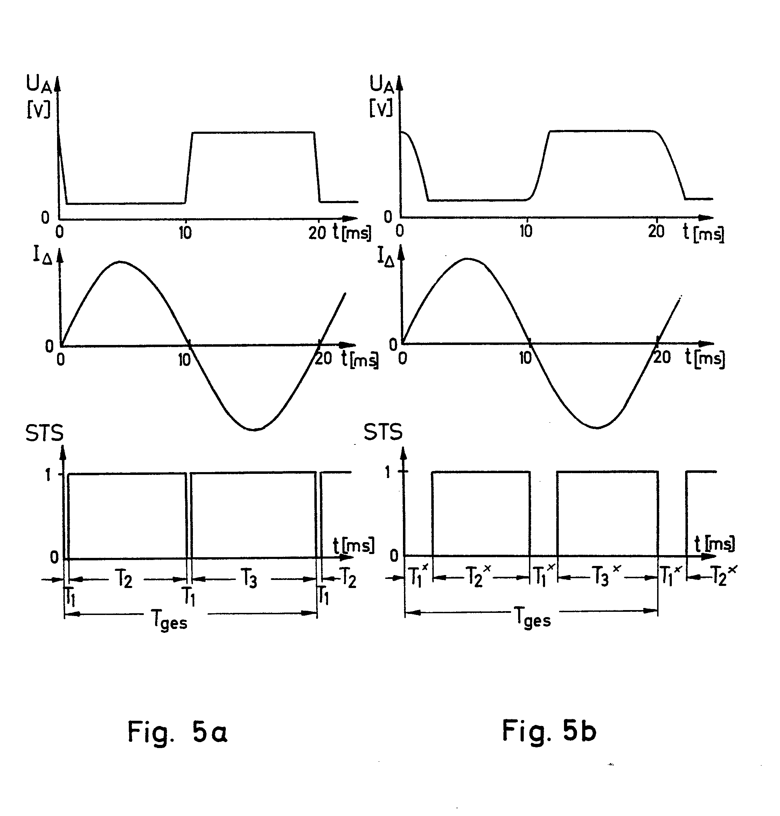

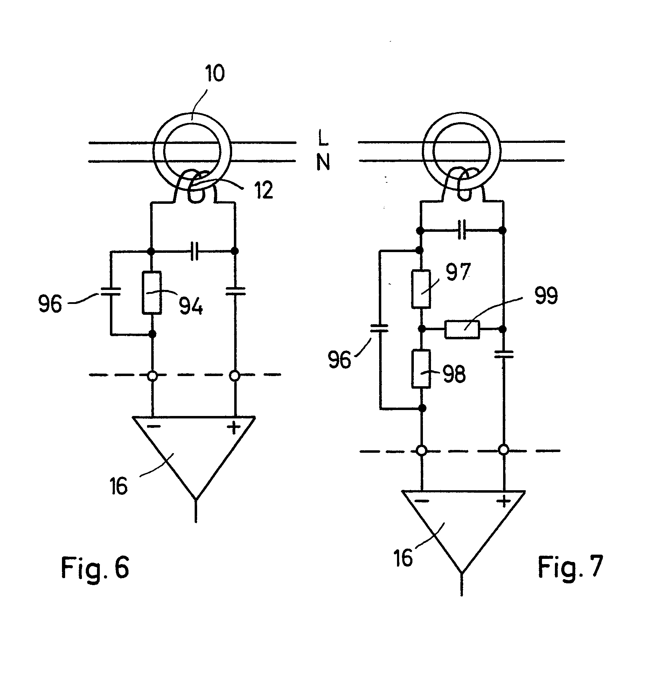

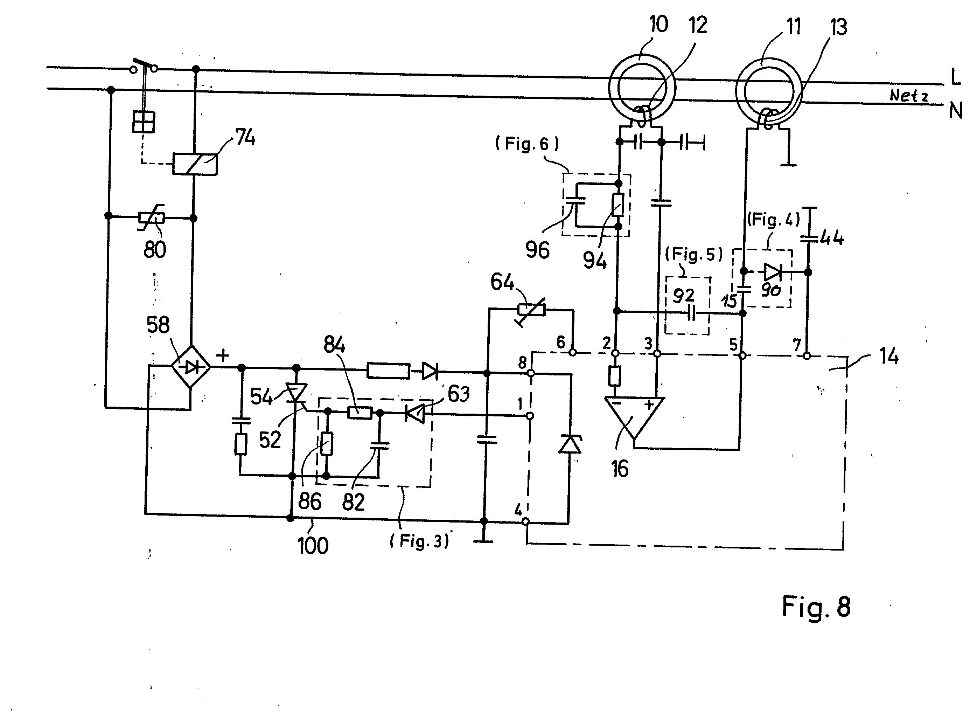

Figur 5a, b    jeweils grafische Darstellungen der Ausgangsspannung des Operationsverstärkers, des Fehlerstromes
und eines den Ladekondensator ansteuernden Signales
über der Zeit, ohne die kapazitive Rückkopplung
der Figur 5 und mit kapazitiver Rückkopplung der
Figur 5,

Figuren 6    zwei Ausführungsformen von Vorschaltgliedern zur
und 7    Anpassung des Summenstromwandlers an den Operationsverstärker bei höheren Fehlernennströmen
als z. B. 5 Milliampere bei Verwendung des
Schaltkreises LM 1851, also von z. B. $I_{\Delta n} =$
10 Milliampere oder 30 Milliampere bei zusätzlich geforderter Erfassung von pulsierenden
Gleichfehlerströmen,

Figur 8    eine Schaltungsanordnung, in der alle in den Figuren 1 bis 7 gegebenen zusätzlichen Beschaltungen verwirklicht sind.

Ein Netz einer elektrischen Versorgung besitzt einen Phasenleiter L und einen Neutralleiter N. Die beiden Leiter L und N sind durch einen Summenstromwandler 10 hindurchgeführt und wirken als Primärwicklung. Der Summenstromwandler 10 besitzt ferner eine Sekundärwicklung 12, die auf Eingänge 2 und 3 eines strichliert dargestellten integrierten Schaltkreises 14 aufgeschaltet sind. Dieser integrierte Schaltkreis ist ein Schaltkreis, der von der Firma National Semiconductor, Corp. USA, unter der Bezeichnung LM 1851 in den Handel gebracht wird. Im Inneren des integrierten Schaltkreises 14 befindet sich ein Operationsverstärker 16 mit einem sogenannten invertierenden Eingang 18 und einem nicht invertierenden Eingang 20. Der invertierende Eingang ist über einen Eingangswiderstand 22 mit der Eingangsklemme 2 verbunden, wogegen der nicht invertierende Eingang 20 mit der Eingangsklemme 3 verbunden ist. Die Sekundärwicklung 12 ist also auf den Eingang 18 und den Eingang 20 des Operationsverstärkers geschaltet.

Der Ausgang 24 des Operationsverstärkers ist einmal auf die Basis eines Transistors 26 und zum anderen auf die Ausgangsklemme 5 des integrierten Schaltkreises 14 geschaltet. Der invertierende Eingang 18 ist mit dem Emitter eines Mehrfachkollektortransistors 28 und der Anode einer Z-Diode 3o verbunden. Die Kathode der Z-Diode 30 ist mit der Basis und einem Kollektor eines zweiten Mehrfachkollektortransistors 32 verbunden. Der Transistor 32 wird ebenso wie der Transistor 28 in Stromspiegelschaltung betrieben.

Der Ausgang des Operationsverstärkers 24 ist mit der Anode einer weiteren Z-Diode 34 verbunden, deren Kathode ebenso wie die der Z-Diode 30 auf die Basis und einen Kollektor des Transistors 28 bzw. des Transistors 32 geschaltet ist. Die beiden anderen Kollektoren der beiden Transistoren 28 und 32 sind miteinander und mit dem Steuerungseingang eines steuerbaren Konstantstromgenerators 38 verbunden. Der Emitter des Transistors 26 ist mit dem Emitter des Transistors 32 verbunden, wogegen der Kollektor des Transistors 26 mit dem Kollektor und der Basis eines in Stromspiegelschaltung betriebenen weiteren Mehrfachkollektortransistors 40 verbunden ist. Der zweite Kollektor 40a des Transistors 40 ist mit dem Konstantstromgenerator 38 verbunden, wogegen der Emitter des Transistors 40 auf die Versorgungs-Eingangsklemme 8 geschaltet ist. Der zweite Kollektor 40a des Transistors 40 ist außerdem mit der Klemme 7 des integrierten Schaltkreises 14 verbunden. Mit der Klemme 7 ist ein außerhalb des Schaltkreises befindlicher zeitbestimmender Kondensator 44 verbunden, dessen zweiter Anschluß mit der Klemme 4 des integrierten Schaltkreises verbunden ist, an der der Minuspol der Versorungsspannung (Masse bzw. OV) angeschlossen wird.

Der zweite Kollektor 40a des Transistors ist darüber hinaus mit einem im IC 14 vorhandenen Latch-Speicher 46 verbunden, dessen Ausgang auf die Basis eines Schalttransistors 48 wirkt. Der Emitter des Transistors 48 liegt an OV (Masse), während der Kollektor dieses Transistors über einen weiteren Konstantstromgenerator 50 an die Eingangsklemme 8 angeschaltet ist. Der Kollektor ist ferner mit der Ausgangsklemme 1 verbunden, die auf das Gate 52 eines Thyristors 54 aufgeschaltet ist, um den Thyristor in Durchlaßrichtung anzusteuern. Der Phasenleiter L ist über die Auslösespule 56 eines Leitungsschutzschalters mit einem Wechselstrom-Anschluß eines Brückengleichrichters 58 verbunden, deren zweiter Wechselstromanschluß mit dem N-Leiter und außerdem mit Erde und einem Schutzleiter PE verbunden ist. Der positive Spannung führende Anschluß des Gleichrichters 58 ist mit der Anode des Thyristors und der negative Anschluß des Gleichrichters 58 mit der Kathode des Thyristors und Masse verbunden. Die Anode des Thyristors ist ferner mit einem Widerstand 60 verbunden, dessen zweiter Anschluß mit der Speisespannungsklemme 8 des Schaltkreises 14 verbunden ist. Parallel zur Klemme 8 und Masse-Klemme 4 liegt ein Glättungs-Kondensator 62. Zur Spannungsstabilisierung dient eine Kette von Z-Dioden und Dioden, die hier durch zwei Z-Dioden 66 und 66a symbolisch dargestellt ist. Die Anode der einen Z-Diode 66 ist mit der Basis eines Transistors 70 verbunden, dessen Emitter mit der Klemme 6 und einem verstellbaren Widerstand 64 verbunden ist, dessen zweiter Anschluß an die Klemme 8 angeschlossen wird. Der Kollektor des Transistors 70 ist mit der Konstantstromquelle 38 verbunden. Das Schaltbild des integrierten Schaltkreises 14 ist lediglich schematisch dargestellt und entspricht im wesentlichen dem Schaltbild, wie es in dem Prospekt der Firma National Semiconductor April 1980 zu ersehen ist. Es wurde ergänzt durch den Transistor 70 und die wichtigsten äußeren Schaltelemente. Im Prospekt ist auch ein genaues Schaltbild mit allen wesentlichen Details veröffentlicht.

Die Wirkungsweise der Anordnung ist nun wie folgt:

Fließt auf der Lastseite kein Strom vom Leiter L gegen Erde bzw. zum Schutzleiter PE, so steht an den Klemmen 2 und 3 kein Fehlerstromsignal an. Die von einer Hilfsspannungsquelle 36 im integrierten Schaltkreis 14 erzeugte Spannung steht sowohl auf dem nichtinvertierenden Eingang 18 als auch auf dem invertierenden Eingang 20 des Operationsverstärkers an, wodurch am Ausgang 24 des Operationsverstärkers ein Mittelspannungssignal abgegeben wird. Aufgrund dieses Signales wird von den Transistoren 28 bzw. 32 auf den Konstantstromgenerator 38 ein Status-Logisch-Null-Signal (STS = 0) abgegeben, wodurch der Konstantstromgenerator so eingestellt wird, daß der evtl. aufgeladene Kondensator 44 mit einem La-destrom von $I_1 = 3 \times I_0$ entladen wird. Diese Einstellung baut eine durch Störimpulse aufgetretene Spannung am Kondensator 44 rasch ab, so daß eine wirksame Störunterdrückung erreicht wird.

0054958

Wenn z. B. durch Berührung des Leiters L durch einen mit Erde
bzw. PE verbundenen Menschen mit einem Körperwiderstand $R_k$
ein Fehlerstrom
auftritt, wird in der Sekundärwicklung 12 ein Fehlerstromsignal erzeugt, welches über die Eingangsklemme 2 und den Eingangswiderstand 22 auf den invertierenden Eingang 18 des
Verstärkers eingegeben wird. Wenn am Eingang 18 das Signal
mit der negativen Halbwelle ansteht, ist der Ausgang 24 des
Operationsverstärkers 16 positiv, so daß die Z-Diode 30 über
die Transistoren 26 und 40 sowie über den Transistor 32 leitend wird und an dem weiteren Kollektor 32a des Transistors
32 ein Status-Logisch-1-Signal (STS) erzeugt wird. Dieses
1- Signal schaltet den Konstantstromgenerator um, so daß der
vom Generator gegen Masse fließende Strom $I_1 = I_0$ ist.

Über den Gleichrichter 58 wird über den Vorwiderstand 60 und
die Klemme 8 der integrierte Schaltkreis 14 mit Energie versorgt und zwar stabilisiert durch die Diodenkette 66 und 66a.
Während der negativen Halbwelle, wenn also am Ausgang des
Verstärkers ein positives Signal ansteht, wird - wie oben erwähnt - der Transistor 26 durchgesteuert, der gleichzeitig
auch den Transistor 40 in leitenden Zustand bringt, wodurch
von der Klemme 8 ein Strom hin zum Emitter des Transistors
40 fließt, wodurch an dem zweiten Kollektor 40a ein Strom
$I_L$ erzeugt wird, der, um den Konstantstrom $I_0$ vermindert, also
mit $I_L - I_0$, den Kondensator 44 zeitbestimmender    Kondensator) auflädt. Die Aufladung des Kondensators 44 erfolgt somit nur während der negativen Halbwelle. Während der positiven Halbwelle an der Klemme 2 wird der Eingang 18 des Operationsverstärkers 16 positiv gegenüber dem Ausgang 24, wodurch
die Z-Diode 34 leitend wird, und den Transistor 28 ansteuert,
so daß über den weiteren Kollektor 28a ebenfalls ein Status-
Logisch-1-Signal (STS) dem Konstantstromgeber 38 zugeführt
wird, so daß auch dann ein Strom $I_1 = I_0$ über den Konstantstromgeber nach Null Volt abfließt.

Wenn also ein Wert 3 x $I_0$ vom Konstantstromgenerator 38 abfließt, wird der Kondensator 44 schnell entladen, so daß dadurch eine Aufladung des Kondensators 44 durch Störimpulse nicht zu einer Auslösung führt. Wenn aufgrund eines Status-1-Signals auf der Leitung 36 vom Konstantstromgeber 38 ein Strom lediglich mit $I_0$ abfließt, dann wird vom Kondensator 44 ein wesentlich geringerer Teil abgezogen, nämlich nur 1/3 des Teiles, der bei Fehlen eines Fehlerstromes abgezogen wird. Die restlichen 2/3 des Stromes können dann bei negativem Signal an der Klemme 2 zum Setzen des Speichers 46 bzw. des Latch 46 verwendet werden. Wenn also von dem Kondensator 44 ein größerer Stromanteil zum Latch 46 fließt, wird dieses gesetzt, wodurch der Transistor 48 angesteuert wird, so daß dieser vom leitenden in den Sperrzustand umgesteuert wird und über den weiteren Konstantstromgeber 50 einen Strom $I_S$ von der Versorgungsspannung hin zu der Steuerelektrode 52 des Thyristors 54 durchläßt, so daß der Thyristor 54 durchgezündet wird und der Auslöser 56 ansprechen kann. Die Größe des Stromes $I_1 = I_0$ bzw. $I_1 = 3 \times I_0$, die der Aufladung des Kondensators 44 entgegenwirkt, wird von der Z-Diode 66, die über eine Leitung 68 mit der Basis eines Transistors 70 verbunden ist, und einem mit dem Emitter des Transistors 70 verbundenen einstellbaren Widerstand 64 bestimmt. Mit letzterem und damit mit dem der Ladung des Kondensators 44 entgegenwirkenden Strom $I_0$ kann der zur Auslösung führende Fehlernennstrom eingestellt werden. Dabei können gleichzeitig die Toleranzen der beteiligten Bauelemente einschließlich des integrierten Schaltkreises 14 sowie des Summenstromwandlers 10 erfaßt werden.

In der Figur 2 ist das Schaltbild gemäß der Figur 1 im wesentlichen unverändert belassen worden, wobei bestimmte, hier nicht interessierende Komponenten zwecks besserer Übersichtlichkeit weggelassen worden sind. Die Speisung des integrierten Schaltkreises erfolgt, wie oben erwähnt, über den Brückengleichrichter 58 und den Vorwiderstand 60. Dem Widerstand 60 folgt eine Entkopplungsdiode 61, und den Eingängen 4 bzw. 8 des integrierten Schaltkreises ist ein Glättungskondensator 62 parallelgeschaltet. Parallel zu den Klemmen 6 und 8 befindet sich der Einstell- bzw. Verstellwiderstand 64. Der Vorwiderstand 60 und die in Reihe damit liegende Diode 61 ist auf der Eingangsklemme 8 geschaltet. Parallel zu den Klemmen 2 und 3 liegt ein Kondensator 76 zur Unterdrückung von Störimpulsen aus dem Netz. Zwischen der Gleichstromquelle 36a und der Wicklung 12 des Summenstromwandlers 10, vorzugsweise - wie in der Zeichnung, Figur 1, dargestellt, zwischen der Klemme 3 und der Wicklung 12, wird ein Kondensator 71 eingesetzt, der in Reihe mit der Sekundärwicklung liegt und zur Gleichstromentkopplung dient.

Im übrigen besteht der Unterschied der Anordnung gemäß der Figur 1 und der der Figur 2 im wesentlichen darin, daß neben dem Summenstromwandler 10 ein weiterer Wandler 11 vorgesehen ist, durch den die Leitungen L und N als eine Wicklung hindurch verlegt sind. Der Wandler 11 besitzt eine weitere Wicklung 13, deren eines Ende mit der Eingangsklemme 5, also dem Ausgang 24 des Operationsverstärkers 16 verbunden ist, wogegen das andere Ende der Wicklung 13 mit einem Kondnsator 15 verbunden ist. Ferner ist in der Schaltungsanordnung nach der Figur 2 ein der Auslösespule 56 entsprechendes Auslöserelais 74 eingezeichnet, die über eine Wirklinie 75 auf ein Schaltschloß 77 einwirkt, das im Falle eines Fehlerstromes Kontakte 79 in den Leitungen L und N oder nur einpolig einen Kontakt in der Leitung L öffnet. Der Auslösestrom wird der Auslösespule 56 von der Wechselstromseite des Gleichrichters 58 zugeführt. Der Thyristor 54 liegt anodenseitig am Pluspol des Gleichrichters, so daß bei einem am Gate 52 des Thyristors anstehenden Zündsignal die Auslösung des Leitungsschutzschalters in beiden Halbwellen des Netzes erfolgen kann.

Ein Fehlerstrom (veranlaßt durch einen Körperstromwiderstand $R_K$ zwischen L und Erde bzw. Schutzerdeleiter PE), wird als geometrische Summe der Ströme im Phasenleiter und im Neutralleiter N vom Summenstromwandler 10, der zweckmäßigerweise ein Windungszahlenverhältnis von z.B. 1 : 1000 besitzt, erfaßt und auf die beiden Eingänge des Operationsverstärkers 16 geschaltet.

An Klemme 3 des Schaltkreises liegt ein Kondensator 78 gegen OV (Masse). Er dient zusammen mit dem Kondensator 76 zur Unterdrückung von Störimpulsen aus dem Netz. Ein Varistor 80, der zwischen L und N liegt, bzw. auch in einer anderen, in Figur 8 gezeigten Ausführungsform zwischen dem Leiter N und der Verbindung zwischen der Auslöserspule 56 und dem Gleichrichter 58 liegen kann, schützt die Schaltung gegen Überspannungsimpulse aus dem Netz.

Die letztgenannte, nicht gezeichnete Anordnung hat den Vorteil, daß die Impedanz der Auslöserspule 56 zum Überlastschutz des Varistors 80 ausgenutzt werden kann. Durch die Aufschaltung des Ausgangs 24 des Operationsverstärkers 16 auf die Wicklung 13 des zweiten Wandlers 11, der z.B. ein Windungszahlen-Verhältnis 1 : 200 besitzt, kann der Neutralleiter auf Erdschluß überwacht werden. Wenn ein Erdschluß im Neutralleiter N über einen Erdschlußwiderstand $R_N$ auftritt, kommt ein Kurzschlußkreis über den Neutralleiter in dem Summenstromwandler 10 und dem Wandler 11 zustande, wodurch sich, bei phasenrichtigem Anschluß beider Sekundärwicklungen, eine positive Rückkopplung über den Operationsverstärker 16 ergibt und eine Schwingung im Mittelfrequenz-(kHz-)Gebiet angefacht wird.

Diese Schwingung mit größerer Amplitude führt wie ein Fehlerstrom zwischen dem Leiter L und der Erde PE zur Auslösung des Schalters 77. Diese Selbsterregung tritt auch bei gleichzeitig anstehendem Fehlerstrom $I_\Delta$ zwischen L und N (über Widerstand $R_K$) auf.

Bei Betrieb der Schaltungsanordnung gemäß der Figur 2 tritt insbesondere bei Fehlerströmen in der Größenordnung des Ansprechwertes des Fehlerstromschutzschalters ein starkes mechanisches Rattern auf, das eine vorzeitige Zerstörung des Auslösers bewirken kann. Dieses Rattern wird dadurch hervorgerufen, daß beim Zünden des Thyristors 54 der Ausgang des Brückengleichrichters 8 durch den Thyristor kurzgeschlossen wird und damit die Speisespannung des integrierten Schaltkreises 14 verschwindet. Die Vorschaltung einer Diode 61 kann allerdings nicht verhindern, daß die von dem Kondensator 62 gestützte Spannung unter die für den im den Schaltkreis 14 vorhandenen Latch-Speicher 46 notwendige Spannung sinkt.

Dann verliert das Latch die gespeicherte Information für die Zündung des Thyristors, so daß ein neuer Aufbau der Zündbedingung erforderlich wird. Eine befriedigende Lösung, um ein Pulsieren der Zündspannung und ein dadurch hervorgerufenes Rattern zu verhindern, ist in der Figur 3 dargestellt. An der Klemme 1 des integrierten Schaltkreises 14 ist eine Diode 63 angeschlossen, die hin zum Gate 52 in Durchlaßrichtung angeordnet ist. An der Katode der Diode 63 ist ein mit seinem zweiten Anschluß an Masse liegender Kondensator 82 angeschaltet. In Reihe mit der Diode 61 befindet sich ein Widerstand 84, und parallel zum Gate ist ein weiterer Widerstand 86 vorgesehen.

Die Aufladung des Kondensators 82 erfolgt über den im integrierten Schaltkreis angeordneten Konstantstromgenerator 50. Die Diode 63 dient zur Verhinderung des Abflusses der Ladung des Kondensators 82 über den bei abgefallenem Latch 46 kurzzeitig leitend werdenden Transistor 48. Der Widerstand 84 dient zur Begrenzung des Entladestromes des Kondensators 82 und der hochohmige Widerstand 86 zwischen Gate und Katode des Thyristors zur Verhinderung einer unerwünschten Auslösung des Thyristors durch Störimpulse. Mit der Anordnung gem. der Figur 3 gelingt es, den Zündbefehl an der Klemme 1 bis zur nächsten Halbwelle der Netzspannung zu speichern und eine erneute Zündung des Thyristors einzuleiten. Wenn z.B. der erste Zündbefehl am Ende der ersten Halbwelle auftritt, die

- 15 -

0054958

Stromflußzeit aber nicht zum Auslösen ausreicht, erfolgt sofort
eine neue Zündung am Anfang der zweiten Halbwelle, wodurch eine
sichere Auslösung des Schalters erreicht wird.

Dieser sogenannte Ratterschutz, der ein pulsierendes Anziehen
des Schaltschlosses verhindert, kann bei allen Arten von Auslösesteuerungen eingesetzt werden, die mit Thyristoren arbeiten,
deren Gate durch eine elektronische Steuereinrichtung gesteuert
wird.

Eine Verbesserung der Überwachung des Neutralleiters auf Erdschluß erfolgt mit einer Schaltungsanordnung gem. der Figur 4.
Bei der Neutralleiterüberwachung ist bei einem Erdschlußfehler
eine möglichst schnelle und sichere Auslösung des Schalters erwünscht. Gemäß der Anordnung der Figur 2 ist die Wicklung 13
des Wandlers 11 mit dem Ausgang des Operationsverstärkers verbunden. In der Anordnung gem. der Figur 4 ist an der Ausgangsklemme 5 des Schaltkreises,die mit dem Operationsverstärkerausgang in Verbindung steht, ein Anschluß des Kondensators 15 angeschlossen, wogegen der zweite Anschluß des Kondensators mit einem Ende der Wicklung 13 verbunden ist. Das andere Ende der
Wicklung 13 liegt an Null Volt (Masse). Zwischen dem zweiten
Anschluß des Kondensators 15 und der Klemme 7 ist eine Diode
90 angeordnet , wobei die Kathode der Diode 90 an Klemme 7 liegt.
An Klemme 7 ist auch der Kondensator 44 angeschlossen, dessen
zweiter Anschluß an Masse liegt. Die bei einem Erdschluß des
Neutralleiters selbst erregende mittelfrequente Schwingung
lädt dann mit ihrer ersten, die Schwellenspannung der Diode 90
überschreitenden Halbwelle den Kondensator 44 soweit auf, daß
das im Schaltkreis 14 befindliche Latch 46 gesetzt wird und die
Zündung des Thyristors 54 und damit die Auslösung des Schutzschalters einleitet (vgl. Beschreibung Figur 1 und 2). Die Anordnung  gemäß der Figur 4 kann unabhängig von der Schaltungsanordnung gemäß der Figur 3 verwendet werden; in einer optimal
wirkenden Schaltungsanordnung allerdings würden beide Maßnahmen
gleichzeitig verwendet werden.

Soll ein Personenschutzautomat nicht nur bei sinusförmigen Fehlerströmen mit vorgegebenem Fehlerstromnennwert, sondern auch bei
pulsierenden Gleichfehlerströmen in den von der VDE-Vorschrift
0664/...80 bestimmten Grenzen auslösen, dann sind bei der Schaltung nach der Figur 2 noch weitere zusätzliche Maßnahmen erforderlich. So weist ein nach Figur 2 aufgebauter Automat, der z.B.
für einen Nennfehlerstrom von 5 Milliampere (sinusförmig) mit
dem Widerstand 64 (vgl. Figur 1) auf einen Ansprechwert von
3,75 Milliampere (sinusförmig) abgeglichen ist, bei pulsierenden
Gleichströmen weit über dem obengenannten Maximalwert $1,4 \times I_{\Delta Nenn}$
liegende Ansprechwerte auf, wobei nach der VDE-Vorschrift die
Prüfung bei Steuerwinkeln von 0° elektrisch und 180° elektrisch,
90° und 270° elektrisch und 135° und 315° elektrisch zu erfüllen
ist. (Der Abgleich bei 3,75 Milliampere ergibt sich aus der VDE-
Forderung, daß bei sinusförmigen Fehlerströmen die Auslösung
zwischen dem 0,5- und einfachem Wert des Nennfehlerstromes erfolgen muß.) Eine einfache und wirksame Maßnahme zur Einhaltung der
vorgeschriebenen Grenzwerte ergibt sich durch eine zusätzliche
kapazitive Rückführung des Operationsverstärkers 16, wobei entsprechend Figur 5 die Klemmen 2 und 5 des integrierten Schaltkreise durch einen Kondensator 92 überbrückt werden.

Die Größe des Kondensators 92 ist wesentlich vom Nennfehlerstrom abhängig. In der Figur 5a ist die Spannung $U_A$ am Ausgang des Operationsverstärkers 16 über der Zeit ohne Kondensator 92, also ohne zusätzliche kapazitive Rückführung dargestellt.
Dies ist der Fall, wenn der darunter eingetragene Fehlerstrom I
ausreichend groß ist, was bedeutet, daß die in den Rückführungen
auftretenden Spannungen größer als die Zener-Spannungen der Z-
Dioden 30 und 34 sind, so daß diese leitend werden. Die am Operationsverstärker 16 auftretende Ausgangsspannung $U_A$ entspricht
nahezu einer Rechteckspannung. Das dann von den Transistoren 28
und 32 abgegebene Status-Signal STS ist fast dauernd logisch 1 und nur beim Nulldurchgang des Fehlerstromes ergeben sich kurze Zeiten $T_1$, bei denen dieses Signal Null wird. Man erkennt den Verlauf des Status-Signals STS aus der unteren Kurve der Figur 5a.

Wenn der Kondensator 92 beispielsweise die Kapazität von 100 pF hat, dann erhält man eine Ausgangsspannung $U_A$ gem. Figur 5b. Die Zeiten, bei denen ein STS-Null-Signal auftritt, nehmen aufgrund des Kurvenverlaufes der Kurve $U_A$ deutlich zu (Zeit $T_1^*$). Wie oben bei der Funktionsweise der Schaltungsanordnung gem. den Figuren 1 und 2 beschrieben, wird der Kondensator 44 lediglich während der am Eingang 18 des Operationsverstärkers 16 anstehenden negativen Halbwelle aufgeladen. Dies bedeutet, daß er lediglich während der Zeit $T_3$ oder $T_3^*$ aufgeladen und während der Teit $T_2$ und $T_2^*$ mit dem Strom $I_O$ entladen wird. Während des Überganges vom Maximal- zum Minimalwert von $U_A$ ist keine der beiden Z-Dioden 34 und 30 leitend und damit STS = 0, wodurch der Kondensator 44 mit dem Strom $3 \times I_O$ entladen wird. Maßgebend für das Setzen des Speichers 46 und damit der Auslösung ist, daß während der Periodendauer $T_{gesamt}$ des Fehlerstromes die Ladung des zeitbestimmenden Kondensators 44 die Entladung übersteigt. Wie man nachweisen kann, muß der Entladestrom bei zusätzlicher kapazitiver Rückführung, also bei Einbau des Kondensators 92 kleiner sein als bei Betrieb ohne den Rückführungskondensator, was sich auch bei der Einstellung des Widerstandes 64 hin zu einem größeren Widerstandswert zeigt. Während bei pulsierendem Gleichstrom ohne diese kapazitive Rückführung die Effektivwerte des Auslösestromes oft über den zulässigen Werten 1,4 mal dem Nennfehlerstrom liegen, bleiben sie mit der Rückführung in den zulässigen Grenzen.

Bei Pulsstrombetrieb ergeben sich wegen des steilen Anstieges der Stromimpulse bei $0°$el. und $180°$el., insbesondere aber bei $90°$el. und $270°$el. sowie bei $135°$ el. und $315°$ el. kürzere Zeiten mit dreifachem Entladestrom $I_1 = 3 \times I_0$ des Kondensators 44, so daß die für die Auslösung erforderlichen Ansprechströme gegenüber dem Betrieb ohne Rückführungskodensator verringert werden.

0054958

Dadurch dient bei der erfindungsgemäßen Schaltungsanordnung der Rückführungskondensator 22 nicht nur zur Integration, sondern auch dazu, die Zeiten, bei denen eine Entladung des Kondensators 44 mit $3 \times I_0$ erfolgt, abhängig von der Form des Fehlerstromes (sinusförmiger Strom oder Pulsstrom) zu reduzieren. Somit löst der Kondensator 92 bei der erfindungsgemäßen Schaltungsanordnung einen Steuerungsvorgang aus.

Anstatt eines einzigen Widerstandes 94, wie er in der Figur 6 dargestellt ist, können auch drei T-förmig einander zugeordnete Widerstände 97, 98 und 99 verwendet werden. Zwischen den beiden Widerständen 97 und 98 und parallel zu den Anschlüssen 2 und 3 des integrierten Schaltkreises, also parallel zu dem invertierenden und dem nichtinvertierenden Eingang ist ein weiterer Widerstand 99 geschaltet.

Damit jedoch mittelfrequenter Strom ungehindert zum Operationsverstärker 16 fließen kann, wird parallel zu dem Widerstand 94 bzw. parallel zu der Reihenschaltung der Widerstände 97 und 98 ein Kondensator 96 geschaltet, der den mittelfrequenten Strom ungehindert passieren läßt.

Die Schaltung gemäß der Figur 6 ist z. B. bei Fehlerströmen von $I_{\Delta n}$ = 10 Milliampere geeignet, wogegen die Schaltungsanordnung gemäß der Figur 7 bei größeren Nennfehlerströmen, z. B. bei $I_{\Delta n}$ = 30 Milliampere geeignet ist. Durch die beiden letztgenannten Schaltungsanordnungen kann eine Anpassung an die vorgeschriebenen Nennfehlerstromgrenzwerte auch bei pulsierenden Gleichfehlerströmen bewirkt werden und zwar bei gleichzeitiger Beibehaltung der einwandfreien Neutralleiterüberwachung auf Erdschluß.

0054958

Der Schaltkreis LM1851 ist entsprechend der amerikanischen Norm UL 943 für sinusförmigen Wechselstrom für einen Fehlerstrom-Nennwert von $I_{\Delta N}$ = 5 mA ausgelegt.

Während bei sinusförmigen Fehlerströmen der Abgleich größerer Werte der Nennfehlerströme, beispielsweise bei 10 oder 30 Milliampere lediglich durch Änderung des Widerstandes 64 möglich ist, ist dies bei pulsierenden Gleichfehlerströmen nicht mehr der Fall. Man müßte bei einem Nennfehlerstrom von 30 Milliampere das Übersetzungsverhältnis des Fehlerstrom-Summenstromwandlers 10 von beispielsweise 1 : 1000 auf 1 : 6000 ändern, um zu erreichen, daß derselbe Strom im Eingangswiderstand des Operationsverstärkers wie bei einem Fehlerstrom von 5 Milliampere eingestellt wird. Durch Beschaltung des Operationsverstärkers mit dem Rückführungskondensator 92 können nunmehr auch pulsierende Gleichfehlerströme beherrscht werden. Allerdings wird der Platzbedarf größer, da wegen der höheren Windungszahl ein größerer Ringkerntransformator (Summenstromwandler) mit größerem Platzbedarf verwendet werden muß. Man kann aber den Summenstromwandler 10 mit einem Übersetzungsverhältnis von 1 : 1000 beispielsweise beibehalten, wenn man zusätzliche Anpassungswiderstände vorsieht.

Am einfachsten wäre es dann, wenn zwischen die Eingangsklemmen 2 und 3 des integrierten Schaltkreises, also parallel zum Eingang des Operationsverstärkers ein Lastwiderstand eingeschaltet wird, der so bemessen ist, daß bei sinusförmigem Fehlerstrom im Eingangswiderstand des Operationsverstärkers 22 (vgl. Figur 1) der gleiche Strom wie bei einem Fehlerstrom von 5 Milliampere fließt. Nachteilig ist diese Beschaltung für die Selbsterregung mittelfrequenter Schwingungen (vgl. Beschreibung Fig. 2) bei einem Erdschluß des Neutralleiters. Zweckmäßiger sind diejenigen Schaltungsanordnungen, die in den Figuren 6 und 7 dargestellt sind. Dabei ist zwischen dem invertierenden Eingang des Operationsverstärkers 16 und der Sekundärwicklung 12 ein Lastwiderstand geschaltet, mit dem eine Einstellung des Nennfehlerstromes bewirkt wird. Mit anderen Worten: Der Widerstand 94 dient dazu, den Eingangsstrom auf dem invertierenden Eingang des Operationsverstärkers 16 auf den für den Operationsverstärker typischen Nennwert zu begrenzen.

Die in den Figuren 3 und 4 dargestellten Schaltungsanordnungen können im Prinzip bei jedem geeigneten integrierten Schaltkreis angewendet werden, vorausgesetzt, dieser Schaltkreis besitzt einen Operationsverstärker, auf den die von der Sekundärwicklung des Summenstromwandlers 10 angegebenen Signale aufgeschaltet werden, ferner einen Speicher ähnlich dem Speicher 46, der einen Thyristor anzusteuern in der Lage ist. Die Anordnung gemäß der Figuren 5, 6 und 7, also die kapazitive Rückführung beim Operationsverstärker und die Vorschaltglieder, sind zunächst nur für den obengenannten integrierten Fehlerstrom-Erfassungsbaustein LM1851 oder nach dem gleichen Prinzip arbeitenden Schaltkreis gedacht.

Die einzelnen Maßnahmen gem. den Figuren 3 bis 7 können, wie oben schon erwähnt, jeweils unabhängig voneinander realisiert werden. Es besteht natürlich auch die Möglichkeit, alle diese Maßnahmen der Figuren 3 bis 7 in einer einzigen Schaltung zu realisieren, was zu einer Schaltungsanordnung gem. der Fig. 8 führt. Dort sind die einzelnen Zusatzkomponenten, die einen Ratterschutz, eine verbesserte Überwachung des Neutralleiters gegen Erdschluß, eine verbesserte Auslösung bei pulsierenden Gleichfehlerströmen und eine Zusatzbeschaltung des ersten Summenstromwandlers bringen, mit strichpunktierten Linien eingerahmt. Ferner sind die zugehörigen Figurenzahlen beigeschrieben, so daß die Übersichtlichkeit der Figur 8 verbessert ist. Die Ausgangsklemme 1 ist auf die Diode 63 geschaltet, an deren Katode der Kondensator 82 anliegt. In Reihe mit der Diode 63 liegt der Widerstand 84 und parallel zum Gate ist der Widerstand 86 angeordnet. Die freien Enden des Widerstandes 86 und des Kondensators 82 sind dann auf die Katodenleitung des Thyristors 54 geschaltet, die selbst wiederum über eine Leitung 100 an Null Volt (Masse) anliegt.

Ansprüche

1. Schaltungsanordnung zur Erfassung eines Fehlerstromes in einem aus wenigstens einem Phasenleiter und einem Neutralleiter gebildeten Netz, mit einem Summenstromwandler, dessen Primärwicklung durch die Phasenleiter und den Neutralleiter gebildet ist und dessen Sekundärwicklung bei Auftreten eines Fehlerstromes ein Fehlerstromsignal abgibt, mit einer Einrichtung, insbesondere einem handelsüblichen integrierten Schaltkreis, zum Verarbeiten und Verstärken des Fehlerstromsignales mit einem Operationsverstärker, auf dessen Eingänge die Enden der Sekundärwicklung geschaltet sind, und mit einem durch einen in Abhängigkeit vom Fehlerstromsignal auf- bzw. entladbaren Kondensator setzbaren Speicher zur Erzeugung eines vom Fehlerstromsignal abhängigen Ausgangssignales, mit einem durch das Ausgangssignal der Einrichtung angesteuerten steuerbaren Halbleiterventil, und mit einem Auslöser zum Betätigen von das Netz (Hauptstromkreis) abschaltenden Schaltkontakten, welcher Auslöser beim Durchsteuern des Halbleiterventiles aufgrund des Setzens des Speichers anspricht, dadurch gekennzeichnet, daß ein als Kondensator ausgebildeter Speicher (82) vorgesehen ist, dessen einer Anschluß zwischen dem Steuereingang (52) des Halbleiterventils (54) und der Klemme der Einrichtung (14), an der das Ausgangssignal ansteht (Ausgangsklemme), und der andere Anschluß auf null Volt geschaltet ist, daß in der Steuerleitung hin zum Steuereingang des Halbleiterventils (54) zwischen der Ausgangsklemme und dem Speicher (82) eine in Richtung hin zum Steuereingang in Durchlaßrichtung geschaltete Diode (61) angeordnet ist, wobei der Speicher so bemessen ist, daß das Ausgangssignal zumindest bis zur nächsten Halbwelle der Netzspannung gespeichert ist und so eine erneute Ansteuerung des Halbleiterventils bis zu dessen Durchschaltung aufrechterhalten bleibt.

2. Schaltungsanordnung nach Anspruch 1, dadurch gekennzeichnet, daß zwischen dem Speicher (82) und dem Steuereingang (52) des Halbleiterventiles ein erster Widerstand (84), der zur Begrenzung des Entladestromes des Speichers (82) dient, und ein zweiter, parallel zur Kathode des Halbleiterventiles (54) und Erde liegender hochohmiger Widerstand (86) vorgesehen sind, wobei der letztere Widerstand zur Verhinderung einer unerwünschten Auslösung des Halbleiterventiles (54) durch Störimpulse dient.

3. Schaltungsanordnung zur Erfassung eines Fehlerstromes in einem aus wenigstens einem Phasenleiter und einem Neutralleiter gebildeten Netz, mit einem Summenstromwandler, dessen Primärwicklung durch die Phasenleiter und den Neutralleiter gebildet ist und dessen Sekundärwicklung bei Auftreten eines Fehlerstromes ein Fehlerstromsignal abgibt, mit einer Einrichtung, insbesondere einem handelsüblichen integrierten Schaltkreis zum Verarbeiten und Verstärken des Fehlerstromsignals mit einem Operationsverstärker, auf dessen Eingänge die Enden der Sekundärwicklung geschaltet sind, und mit einem durch einen in Abhängigkeit vom Fehlerstromsignal auf- bzw. entladebaren Kondensator setzbaren Speicher zur Erzeugung eines vom Fehlerstromsignal abhängigen Ausgangssignals, mit einem durch das Ausgangssignal der Einrichtung angesteuerten steuerbaren Halbleiterventil, und mit einem Auslöser zum Betätigen von das Netz (Hauptstromkreis) abschaltenden Schaltkontakten, welcher Auslöser beim Durchsteuern des Halbleiterventiles aufgrund des Setzens des Speichers anspricht, und mit einem weiteren Wandler, dessen eine Wicklung durch die Netzleiter gebildet und dessen weitere Wicklung mit ihrem einen Ende an den Ausgang des Operationsverstärkers und mit ihrem anderen Ende an Null Volt angeschlossen ist, wobei zwischen dem Ausgang des Operationsverstärkers und dem einen Ende der weiteren Wicklung des weiteren Wandlers mit diesem ein weiterer Kondensator in Reihe geschaltet ist, der zusammen mit der weiteren Wicklung einen Schwingkreis bildet, der bei Auftreten einer Rückkopplung durch einen Erdschluß des Neutralleiters über den Operationsverstärker eine mittelfrequente Schwingung anfacht, insbesondere nach einem der Ansprüche 1 und 2, dadurch gekennzeichnet, daß zwischen dem Verbindungspunkt des weiteren Kondensators (12) und der Sekundärwicklung (13) gegen die Anschlußklemme (7) eine Diode (90) geschaltet ist, deren Kathode an der Anschlußklemme (7) der Einrichtung (14) ansteht, welcher Anschluß mit einem zeitbestimmenden Kondensator (44) und einem in der Einrichtung befindlichen Latch-Speicher (47) verbunden ist und bei einer Schwingungsamplitude, deren Spannung über der Schwellenspannung der Diode liegt, den zeitbestimmenden Kondensator (44) auflädt und den Latch-Speicher setzt und damit über das Halbleiterventil (54) das Relais (56) des Auslösers ansteuert.

4. Schaltungsanordnung zur Erfassung eines Fehlerstromes in einem aus wenigstens einem Phasenleiter und einem Neutralleiter gebildeten Netz, mit einem Summenstromwandler, dessen Primärwicklung durch die Phasenleiter gebildet ist und dessen Sekundärwicklung bei Auftreten eines Fehlerstromes ein Fehlerstromsignal abgibt, mit einer Einrichtung, insbesondere einem handelsüblichen integrierten Schaltkreis zum Verarbeiten und Verstärken des Fehlerstromsignales mit einem Operationsverstärker, auf dessen Eingänge die Enden der Sekundärwicklung geschaltet sind, und mit einem durch einen in Abhängigkeit vom Fehlerstromsignal auf- bzw. entladbaren Kondensator setzbaren Speicher zur Erzeugung eines vom Fehlerstromsignal abhängigen Ausgangssignales, mit einem durch das Ausgangssignal der Einrichtung angesteuerten steuerbaren Halbleiterventil und mit einem Auslöser zum Betätigen von das Netz (Hauptstromleiter) abschaltenden Schaltkontakten, welcher Auslöser beim Durchsteuern des Halbleiterventiles aufgrund des Setzens des Speichers anspricht, wobei die Einrichtung insbesondere ein integrierter Schaltkreis ist, der unter der Bezeichnung LM 1851 von der Firma National Semiconductor, USA, vertrieben wird, insbesondere nach einem der Ansprüche 1 bis 3, dadurch gekennzeichnet, daß zwischen dem invertierenden Eingang des Operationsverstärkers (16) und dessen Ausgang ein Rückführungskondensator (92) mit einer Kapazität von z. B. 100 pF geschaltet ist.

5. Schaltungsanordnung zur Erfassung eines Fehlerstromes in einem aus wenigstens einem Phasenleiter und einem Neutralleiter gebildeten Netz, mit einem Summenstromwandler, dessen Primärwicklung durch die Phasenleiter und den Neutralleiter gebildet ist und dessen Sekundärwicklung bei Auftreten eines Fehlerstromes ein Fehlerstromsignal abgibt, mit eine Einrichtung, inbesondere einem handelsüblichen integrierten Schaltkreis zum Verarbeiten und Verstärken des Fehlerstromsignals mti einem Operationsverstärker mit zwei Rückführungen zur Ableitung eines Statussignals, das die Auf- und Entladung eines Kondensators, auf dessen Eingänge die Enden der Sekundärwicklung geschaltet sind, steuert und mit einem durch einen in Abhängigkeit vom Fehlerstromsignal auf- bzw. entladbaren Kondensator setzbaren Speicher zur Erzeugung eines vom Fehlerstromsignal abhängigen Ausgangssignales mit einem durch das Ausgangssignal der Einrichtung angesteuerten steuerbaren Halbleiterventi, und mit einem Auslöser zum Betätigen von das Netz (Hauptstromkreis) abschaltenden Schaltkontakten, welcher Auslöser beim Durchsteuern des Halbleiterventiles aufgrund des Setzens des Speichers anspricht, insbesondere nach einem der vorigen Ansprüche, dadurch gekennzeichnet, daß zwischen dem einen Ende der Sekundärwicklung (12) des ersten Summenstromwandlers (10) und dem invertierenden Eingang des Operationsverstärkers (16) ein ohmscher Widerstand (94) vorgesehen ist, der den Eingangsstrom am invertierenden Eingang des Operationsverstärkers auf den für den Operationsverstärker typischen Nennstrom begrenzt.

6. Schaltungsanordnung nach Anspruch 5, dadurch gekennzeichnet, daß der ohmsche Widerstand (94) aus zwei in Reihe geschalteten Teilwiderständen (97, 98) gebildet ist und daß ein weiterer Widerstand (99) zwischen den Verbindungspunkt beider Teilwiderstände (97, 98) gegen den nichtinvertierenden Eingang des Operationsverstärkers geschaltet ist, wobei diesem Eingang des Operationsverstärkers (16) ein Kondensator (71) vorgeschaltet ist.

7. Schaltungsanordnung nach einem der Ansprüche 5 und 6, dadurch gekennzeichnet, daß parallel zu dem ohmschen Widerstand (94) bzw. den beiden Teilwiderständen (97, 98) ein Kodensator (96) vorgesehen ist, der die mittelfrequenten Schwingungen im Erdschlußfall des Neutralleiters passieren läßt.

1/5

0054958

Fig.1

Fig.2

Fig.3

Fig.4

Fig.5

0054958

Fig. 5a

Fig. 5b

0054958

Fig. 6

Fig. 7

L
N
Netz

11 13
10 12

(Fig.4) 90
44
(Fig.5) 92
15
7
5
3
16
2
6
14
(Fig.6) 94 96
64
8
1
4
63
84
82
(Fig.3) 100
54 52 86
74
80
58

Fig. 8